# EUROPÄISCHE PATENTANMELDUNG

(11) **EP 3 228 931 A1**
(43) Veröffentlichungstag der Anmeldung: **11.10.2017**
(21) Anmeldenummer: 16163636.0
(22) Anmeldetag: 04.04.2016
(51) Int. Cl.: F21V 8/00, B29D 11/00

(54) **LICHTLEITER MIT LICHTUMLENKSTRUKTUREN**

(71) Anmelder: Weidplas GmbH, 8640 Rapperswil (CH)
(72) Erfinder: KINDL, Christoph, 66386 St. Ingbert (DE); QUIEN, Norbert, 66386 St. Ingbert (DE)
(74) Vertreter: Rutz, Andrea

(57) **Zusammenfassung**

Es wird ein Lichtleiter (1) angegeben, welcher eine Vielzahl von Lichtumlenkstrukturen (3) aufweist, die im Inneren des Lichtleiters (1) angeordnet sind. Die Lichtumlenkstrukturen (3) weisen jeweils einen langgestreckten Grundkörper (4) auf, welcher entlang seiner Längsrichtung um ein Vielfaches grösser dimensioniert ist als in die senkrecht zu dieser Längsrichtung stehenden Richtungen.

## Beschreibung

### TECHNISCHES GEBIET

Die vorliegende Erfindung betrifft einen Lichtleiter, welcher eine Vielzahl von Lichtumlenkstrukturen aufweist. Derartige Lichtleiter werden in verschiedenen Anwendungsgebieten und insbesondere im Automobilbau zum Beispiel zur Herstellung eines beleuchtbaren Anzeige- oder Dekorelements verwendet.

### STAND DER TECHNIK

Lichtleiter dienen zum Transportieren von Licht und werden in den unterschiedlichsten Anwendungsgebieten verwendet. Der Lichtleiter leitet die von einer Lichtquelle ausgestrahlten Lichtstrahlen, welche zum Beispiel über eine Lichteinkoppelfläche in den Lichtleiter eingekoppelt werden, in seinem Inneren zu einer Lichtauskoppelfläche, über welche die Lichtstrahlen den Lichtleiter verlassen. Die Lichtstrahlen können den Lichtleiter dabei diffus in verschiedene Richtungen oder gezielt in eine bestimmte Richtung, zum Beispiel in Richtung eines Betrachters, verlassen, um eine entsprechend gewünschte Lichtwirkung zu erzielen.

Ein Anwendungsgebiet von Lichtleitern findet sich insbesondere im Automobilbau. So ist es bei Kraftfahrzeugen bekannt, im Innen- oder Aussenraum befindliche Bedien- und Betätigungselemente mit Anzeige- und Ausleuchtelementen zu versehen, die via einen Lichtleiter von einer dahinter angeordneten Lichtquelle beleuchtet werden, um die Erkennbarkeit der einzelnen Bedien- und Betätigungselemente insbesondere auch bei Nacht zu gewährleisten. Auch werden oft hinterleuchtbare und entsprechend mit einem Lichtleiter versehene Dekorelemente und Zierleisten verwendet, um zum Beispiel in Form einer Türeinstiegsleiste auf den Markennamen des Kraftfahrzeugs hinzuweisen, oder um einen speziellen Effekt zu bewirken und dabei die Wahrnehmung des Betrachters auf sich zu ziehen. Der Lichtleiter kann somit insbesondere dazu dienen, eine gleichmässige Ausleuchtung des bzw. der Anzeige- oder Dekorelemente zu erreichen.

Ein anderes Anwendungsgebiet betrifft zum Beispiel die Raumausleuchtung und die Raumbeleuchtung. Lichtleiter werden hier in Leuchten verwendet, um eine bestimmte gewünschte Abstrahlung des von einer oder mehreren Lichtquellen ausgestrahlten Lichts zu erreichen. Je nach Anwendung kann die gewünscht Abstrahlung gezielt und insbesondere fokussiert in eine bestimmte Richtung erfolgen oder diffus in unterschiedliche Richtungen.

Um die Lichtstrahlen möglichst gleichmässig und verlustfrei zu einer Lichtauskoppelfläche zu leiten, wird in der DE 10 2014 216 780 vorgeschlagen, an der der Lichtauskoppelfläche gegenüberliegenden Aussenfläche des Lichtleiters eine Vielzahl von Lichtumlenkstrukturen in Form von Erhebungen und Vertiefungen vorzusehen. Eine Beschädigung der mit den Lichtumlenkstrukturen versehenen Oberfläche des Lichtleiters führt jedoch zu einer veränderten Abstrahlcharakteristik des Lichtleiters.

In der DE 299 17 623 wird ein Lichtleiter mit Lichtumlenkstrukturen offenbart, die im Inneren des Lichtleiters angeordnet sind. Die Lichtumlenkstrukturen werden dabei mittels Laserbearbeitung durch lokale Aufschmelzung des Polymermaterials des Lichtleiters erzeugt.

### DARSTELLUNG DER ERFINDUNG

Es ist eine Aufgabe der vorliegenden Erfindung, einen bzgl. Beschädigungen unempfindlichen Lichtleiter anzugeben, welcher eine effiziente und einfach einstellbare Lichtauskopplung ermöglicht.

Zur Lösung dieser Aufgabe wird ein Lichtleiter vorgeschlagen, wie er in Anspruch 1 angegeben ist. Vorteilhafte Ausgestaltungen der Erfindung sind in den abhängigen Ansprüchen angegeben.

Die vorliegende Erfindung stellt also einen Lichtleiter zur Verfügung mit einer Vielzahl von Lichtumlenkstrukturen, die im Inneren des Lichtleiters angeordnet sind. Die Lichtumlenkstrukturen weisen jeweils einen langgestreckten Grundkörper auf, welcher entlang seiner Längsrichtung um ein Vielfaches grösser dimensioniert ist als in die senkrecht zu dieser Längsrichtung stehenden Richtungen.

Es hat sich gezeigt, dass Lichtstrahlen, welche insbesondere seitlich, das heisst aus einer im Wesentlichen senkrecht zur Längsrichtung der Lichtumlenkstrukturen stehenden Richtung, auf eine der Lichtumlenkstrukturen auftreffen, eine Umlenkung zur Längsrichtung der Lichtumlenkstruktur hin erfahren. Konkret wird das Licht dabei jeweils zur Längsachse des Grundkörpers hin umgelenkt, welche sich zentral in Längsrichtung durch den Grundkörper hindurch erstreckt.

Durch das Vorsehen einer Vielzahl von derartigen Lichtumlenkstrukturen in einem Lichtleiter kann somit eine gezielte Lichtumlenkung des in den Lichtleiter eingestrahlten Lichts in eine oder mehrere bestimmte Richtungen erreicht werden. Das Licht kann dadurch in eine oder mehrere einstellbare Richtungen aus dem Lichtleiter ausgekoppelt werden. Je nach Ausrichtung und Lage der Lichtumlenkstrukturen kann die Lichtauskopplung derart eingestellt werden, dass sie zum Beispiel fokussiert aus dem Lichtleiter in eine bestimmte Richtung oder diffus in einen bestimmten Richtungsbereich erfolgt.

Der Grundkörper der Lichtumlenkstrukturen ist vorteilhaft stabförmig ausgebildet. Entlang seiner Längsrichtung ist der Grundkörper somit um ein Vielfaches grösser dimensioniert als in alle senkrecht zu dieser Längsrichtung stehenden Richtungen. Vorteilhaft ist er um einen Faktor von zumindest 3, vorteilhafter von zumindest 5 und noch vorteilhafter von zumindest 10 entlang seiner Längsrichtung grösser bemessen als in die an irgendeiner Stelle entlang seiner Längserstreckung senkrecht dazu stehenden Richtungen. Es wurde festgestellt, dass die Lichtauskoppelung, insbesondere die gezielte Lichtauskopplung, aus dem Lichtleiter je effizienter wird, desto langgestreckter die Grundkörper der Lichtumlenkstrukturen sind.

Da die Lichtumlenkstrukturen im Inneren des Lichtleiters angeordnet sind, hat eine Beschädigung der Lichtleiteroberfläche keinen oder kaum einen Einfluss auf die Funktion des Lichtleiters, was dessen Lichtabstrahlcharakteristik angeht. Vorteilhaft sind die Lichtumlenkstrukturen dabei vollständig im Inneren des Lichtleiters angeordnet, das heisst komplett vom Material des Lichtleiters umgeben.

Vorzugsweise sind die Lichtumlenkstrukturen durch eine lokale Materialveränderung, insbesondere durch eine Aufschmelzung des Materials, des Lichtleiters hergestellt. Das Material des Lichtleiters wird zur Herstellung der Lichtumlenkstrukturen also vorzugsweise an den entsprechenden Stellen mittels Wärmeeinwirkung aufgeschmolzen und wieder abgekühlt. Es wird dadurch an den jeweiligen Stellen eine lokale Strukturveränderung des Lichtleitermaterials bewirkt, wodurch die Lichtumlenkstrukturen gebildet werden. Das Material des Lichtleiters wird vorzugsweise bei der Herstellung der Lichtumlenkstrukturen aber nicht karbonisiert.

Beim Material des Lichtleiters handelt es sich bevorzugt um Kunststoff, Glas oder um ein Elastomer. Vorzugsweise ist der Lichtleiter zudem aus einem transparenten Material hergestellt. Es kann sich beim Kunststoff beispielsweise um Polymethylmethacrylat (PMMA), Polycarbonat (PC) oder Polymethacrylmethylimid (PMMI) handeln. Beim Elastomer kann es sich beispielsweise um Silikon handeln.

Vorzugsweise sind die Lichtumlenkstrukturen mittels eines Lasers hergestellt. Das Laserlicht bewirkt in diesem Fall an den entsprechenden Stellen im Lichtleiter jeweils bevorzugt einen lokalen Wärmeeintrag, welcher zu einer Materialaufschmelzung führt. Die Herstellung der Lichtumlenkstrukturen mittels eines Lasers ist nicht nur besonders einfach, sondern kann auch einfach derart durchgeführt werden, dass die erwähnten langgestreckten Grundkörper sowie die nachstehend angegebenen lokalen Verdickungen und Fahnen entstehen. Bei der Herstellung der Lichtumlenkstrukturen mittels eines Lasers kann gewährleistet werden, dass das Material zwar lokal aufgeschmolzen, nicht aber karbonisiert wird. Selbstverständlich können die Lichtumlenkstrukturen aber auch mittels beliebiger anderer, dem Fachmann bekannten Verfahren hergestellt werden.

Die vorliegende Erfindung bezieht sich somit ausserdem auf ein Verfahren zur Herstellung eines Lichtleiters, der wie angegeben ausgebildet ist. Dabei wird der Lichtleiter mit einem Laser bestrahlt, um im Inneren des Lichtleiters eine Vielzahl von Lichtumlenkstrukturen mit jeweils einem langgestreckten Grundkörper auszubilden.

Um eine optimale Form der Lichtumlenkstrukturen zu erreichen, werden diese bevorzugt mit Hilfe von grünem Laserlicht hergestellt. Vorzugweise weist das grüne Laserlicht eine Wellenlänge im Bereich von 490 nm - 575 nm auf. Vorteilhaft wird ein Ultrakurzpulslaser, bevorzugter ein Femtosekundenlaser oder ein Pikosekundenlaser, verwendet.

Bevorzugt ist der Grundkörper der Lichtumlenkstrukturen jeweils im Wesentlichen rotationssymmetrisch, insbesondere vollständig rotationssymmetrisch. Die Lichtumlenkstrukturen sind dadurch einfacher herstellbar, und die durch die Lichtumlenkstrukturen bewirkte Lichtumlenkung ist einfacher vorausrechenbar. Es kann insbesondere eine Leuchtdichtesimulationssoftware erstellt werden, um die Leuchtdichte an der Oberfläche und insbesondere an der Lichtauskoppelfläche des Lichtleiters vorauszuberechnen, bzw. um umgekehrt dazu ausgehend von einer gewünschten Oberflächenleuchtdichte die Anordnung und/oder Ausbildung der Lichtumlenkstrukturen innerhalb des Lichtleiters zu bestimmen. Auf diese Art und Weise kann sehr einfach eine beliebige gewünschte Leuchtdichteverteilung an der Lichtleiteroberfläche erzielt werden. Durch die Rotationssymmetrie des Grundkörpers ist die Längsachse der jeweiligen Lichtumlenkstruktur bestimmt, welche mit der Symmetrieachse übereinstimmt.

Unter dem Begriff "Leuchtdichte" wird das Verhältnis der Lichtstärke zur Grösse der sichtbaren leuchtenden Lichtauskoppelfläche verstanden, welche in Candela pro Quadratmeter der Lichtauskoppelfläche (cd/m²) angegeben wird.

In einer insbesondere bevorzugten Ausführungsform weist zumindest ein Grundkörper entlang seiner Längsrichtung eine lokale Verdickung auf, bevorzugt weisen sämtliche Grundkörper entlang ihrer Längsrichtung jeweils eine lokale Verdickung auf. Die lokale Verdickung ist entlang der Längsrichtung des Grundkörpers bevorzugt jeweils dezentral im Grundkörper angeordnet, das heisst nicht genau in der Mitte des Grundkörpers. Es hat sich gezeigt, dass ein überwiegender Grossteil der seitlich auf die Lichtumlenkstruktur einfallenden Lichtstrahlen in Richtung zur Längsachse des Grundkörpers hin umgelenkt wird.

Die Verdickung weist bevorzugt senkrecht zur Längsachse des Grundkörpers einen kreisförmigen Querschnitt auf. Bevorzugt ist die Verdickung in Bezug auf die Längsrichtung des Grundkörpers bei 15 - 35 % der gesamten Längserstreckung des Grundkörpers angeordnet. Der Durchmesser der Verdickung, gemessen in eine senkrecht zur Längsachse des Grundkörpers stehende Richtung, ist bevorzugt nicht grösser als 30 µm.

Vorteilhaft erstrecken sich die Grundkörper der Lichtumlenkstrukturen entlang ihrer jeweiligen Längsrichtung im Wesentlichen parallel, bevorzugt vollständig parallel zueinander. Es kann dadurch beispielsweise erreicht werden, dass das in den Lichtleiter eingestrahlte Licht zu einem überwiegenden Grossteil aus zwei zueinander gegenüberliegenden, bevorzugt ebenen Aussenflächen des Lichtleiters ausgekoppelt wird.

In einer bevorzugten Ausführungsform weist zumindest eine Lichtumlenkstruktur zumindest eine, insbesondere zwei oder mehr als zwei Fahnen auf, welche am Grundkörper angebracht sind, bevorzugt weisen sämtliche Lichtumlenkstrukturen jeweils zumindest eine, insbesondere zwei oder mehr als zwei Fahnen auf, welche am Grundkörper angebracht sind. Der Ausdruck Fahne bezieht sich auf die Form der Lichtumlenkstrukturen und ist zu verstehen als ein an der Grundstruktur angebrachter lappenförmiger Teil. Die Fahne bzw. Fahnen haben bevorzugt insgesamt eine annähernd viereckige Form, wobei sie sich vorwiegend entlang von zwei Dimensionen in einer Fläche erstrecken, welche insbesondere eben sein kann. In die dritte, zu dieser Fläche senkrecht stehende Dimension weist die zumindest eine Fahne in der Regel eine Dicke auf, welche im Vergleich zu den Seitenlängen der Fahne in der Fläche entlang der ersten beiden Dimensionen um ein Vielfaches kleiner dimensioniert ist. Bevorzug ist die zumindest eine Fahne höchstens 5 µm dick. Bevorzugt ist die zumindest eine Fahne entlang einer ihrer vier Seiten, insbesondere entlang einer gesamten Seitenlänge, mit dem Grundkörper verbunden.

Durch das Vorsehen der Fahne bzw. der Fahnen kann die für die Lichtumlenkung relevante Fläche der Lichtumlenkstruktur wesentlich vergrössert werden, so dass pro Lichtumlenkstruktur erheblich mehr Licht umgelenkt werden kann. Die Fahne(n) dienen also dazu, die Effizienz der Lichtumlenkung zu verbessern.

Vorteilhaft erstreckt sich zumindest eine Fahne der zumindest einen Fahne über 1/3 bis 2/3 der gesamten Längserstreckung des Grundkörpers. Die zumindest eine Fahne kann dabei insbesondere entlang einer ihrer Seiten über einen Bereich von 1/3 bis 2/3 der gesamten Längserstreckung des Grundkörpers mit diesem verbunden sein. Die Breite der Fahne, gemessen in eine senkrecht zur Längsachse des Grundkörpers stehende Richtung, beträgt bevorzugt höchstens 30 µm.

Vorteilhaft ist der Grundkörper einteilig oder mehrteilig, bevorzugt einteilig ausgebildet. Falls der Grundkörper mehrteilig ausgebildet ist, so ist der Grundkörper bevorzugt wenigstens zweiteilig aufgebaut. Falls der Grundkörper wenigstens zweiteilig aufgebaut ist, so sind die wenigstens zwei Teile des Grundkörpers bevorzugt voneinander beabstandet. Bevorzugt sind die wenigstens zwei Teile mittels wenigstens einer Fahne miteinander verbunden. Die Lichtumlenkstrukturen sind vorteilhaft jedoch jeweils als Ganzes einteilig ausgebildet, das heisst sie weisen keine voneinander beabstandeten Teile auf, die nicht durch ein anderes Teil derselben Lichtumlenkstruktur miteinander verbunden sind.

Bevorzugt, um eine besonders grosse, für die Lichtumlenkung relevante Fläche zu erreichen, sind jeweils zumindest zwei Fahnen am Grundkörper angebracht. Um die Oberfläche der Lichtumlenkstruktur im Hinblick auf die Lichtumlenkung zu maximieren, sind die beiden Fahnen vorteilhaft auf im Wesentlichen diametral einander gegenüberliegenden Seiten am Grundkörper angebracht und erstrecken sich insbesondere in einander entgegengesetzte radiale Richtungen vom Grundkörper weg.

Der Lichtleiter weist bevorzugt eine Lichtauskoppelfläche auf, über welche das in den Lichtleiter von einer Lichtquelle eingestrahlte Licht nach aussen hin abgestrahlt wird. Vorzugsweise stehen die Grundkörper der Lichtumlenkstrukturen mit ihren Längsrichtungen, das heisst Längsachsen, jeweils im Wesentlichen senkrecht zu dieser Lichtauskoppelfläche.

Um eine gute Ausleuchtung erreichen zu können, weisen die Grundkörper der Lichtumlenkstrukturen bevorzugt jeweils eine Längserstreckung von mindestens 100 µm, noch bevorzugter von mindestens 300 µm, auf. Vorteilhaft sind die Lichtumlenkstrukturen bzw. deren Grundkörper jedoch höchstens 800 µm lang. Lichtumlenkstrukturen, welche eine grössere Längserstreckung aufweisen, werden für das menschliche Auge sichtbar, was in den meisten Fällen nicht erwünscht ist. Bzgl. der Sichtbarkeit für das menschliche Auge wird hier sowie nachstehend jeweils von einem Abstand von ca. 30 cm - 70 cm von der Lichtauskoppelfläche ausgegangen. Unsichtbar sind die Lichtumlenkstrukturen dann, wenn im unbeleuchteten Zustand der Bereich des Lichtleiters mit den Lichtumlenkstrukturen aus einer solchen Distanz für einen Betrachter kaum von einem Bereich des Lichtleiters unterscheidbar ist, der keine Lichtumlenkstrukturen aufweist. Insbesondere sind die einzelnen Lichtumlenkstrukturen dann kaum zu erkennen.

Vorteilhaft sind die Lichtumlenkstrukturen in regelmässigen oder unregelmässigen Abständen, bevorzugt in regelmässigen Abständen, zueinander im Lichtleiter angeordnet. Die Abstände zwischen den Lichtumlenkstrukturen betragen bevorzugt jeweils mindestens 50 µm, bevorzugter jeweils mindestens 80 µm, insbesondere mindestens 100 µm. Je grösser die Abstände zwischen den einzelnen Lichtumlenkstrukturen sind, desto schwerer sind sie von Auge im unbeleuchteten Zustand des Lichtleiters im Lichtleiter erkennbar. Bei Abständen von weniger als 50 µm sind die Strukturen unabhängig von der eingesetzten Laserenergie zu deren Herstellung sichtbar. Um eine ausreichende Lichtumlenkung und somit Ausleuchtung im Bereich der Lichtauskoppelfläche zu gewährleisten, sollten die Lichtumlenkstrukturen jedoch Abstände zwischen einander von bevorzugt höchstens 400 µm, bevorzugter von höchstens 200 µm, insbesondere von höchstens 150 µm haben.

Vorteilhaft weist der Grundkörper der Lichtumlenkstrukturen des Lichtleiters senkrecht zur seiner Längsrichtung, insbesondere im Bereich einer allfällig vorhandenen Verdickung des Grundkörpers, eine kreisförmige Querschnittsfläche mit einem Mittelpunkt M auf, wobei ein maximaler Durchmesser d der kreisförmigen Querschnittsfläche des Grundkörpers einer jeweiligen Lichtumlenkstruktur 30 Mikrometer oder weniger beträgt, und wobei der Abstand A zwischen den Mittelpunkten M der kreisförmigen Querschnittsfläche des Grundkörpers der Lichtumlenkstrukturen des Lichtleiters wenigstens 50 Mikrometer beträgt.

Bevorzugt erfüllt der Abstand A folgendes 1. Kriterium:
Der Abstand A ist grösser als dreimal der maximale Durchmesser d eines Grundkörpers wenigstens einer Lichtumlenkstruktur des Lichtleiters.

Vorteilhaft erfüllt der Abstand A alternativ oder zusätzlich zum 1. Kriterium folgendes 2. Kriterium:
Der Mittelpunkt der kreisförmigen Querschnittsfläche des Grundkörpers einer jeweiligen Lichtumlenkstruktur des Lichtleiters zum Mittelpunkt der kreisförmigen Querschnittsfläche der Grundkörper sämtlicher weiteren Lichtumlenkstrukturen des Lichtleiters weist einen Abstand A auf, wobei der Abstand A grösser als der maximale Durchmesser d der kreisförmigen Querschnittsfläche des Grundkörpers der jeweiligen Lichtumlenkstruktur geteilt durch den Wert 0.33 ist.

Diese vorteilhafte Ausführungsform bietet den Vorteil, dass die Lichtumlenkstrukturen des Lichtleiters im unbeleuchteten Zustand des Lichtleiters von Auge kaum sichtbar sind.

Besonders vorteilhaft weist der Grundkörper der Lichtumlenkstrukturen senkrecht zur seiner Längsrichtung, insbesondere im Bereich einer allfällig vorhandenen Verdickung des Grundkörpers, eine kreisförmige Querschnittsfläche auf, das heisst eine Querschnittsfläche, welche von einer äusseren Begrenzungslinie umrandet ist, die zumindest annähernd, insbesondere im Wesentlichen einen Kreis bildet. Diese äussere Begrenzungslinie weist insbesondere einen maximalen Durchmesser d auf.

Die Lichtumlenkstrukturen können derart im Lichtleiter angeordnet sein, dass das von den Lichtumlenkstrukturen ausgekoppelte Licht als ein Buchstabe, ein Schriftzug, eine Nummer und/oder ein Symbol erscheint. Die Lichtumlenkstrukturen können, um diesen Effekt zu erreichen, entsprechend in der Form eines Buchstabens, eines Schriftzugs, einer Nummer und/oder eines Symbols im Lichtleiter angeordnet sein.

Gemäss einer Weiterbildung der Erfindung weisen die verschiedenen Lichtumlenkstrukturen unterschiedliche Geometrien, insbesondere unterschiedliche Längserstreckungen, auf, so dass das via die Lichtauskoppelfläche des Lichtleiters ausgekoppelte Licht eine Helligkeitsverteilung aufweist, welche über die Lichtauskoppelfläche variiert. Mit anderen Worten wird die variierende Helligkeitsverteilung aufgrund der unterschiedlichen Geometrien, insbesondere Längserstreckungen der Grundkörper der Lichtumlenkstrukturen bewirkt. Auch unterschiedliche Anzahl von Fahnen und/oder Grössen der Fahnen und/oder der Verdickungen können zu unterschiedlichen Helligkeitswerten führen. Die Lichtumlenkstrukturen können also zum Beispiel insgesamt ein Grauwertbild darstellen und dennoch in regelmässigen Abständen zueinander im gesamten Lichtleiter verteilt sein. Die unterschiedlichen Grauwerte können insbesondere mittels unterschiedlichen Energieeinträgen bei der Herstellung der einzelnen Lichtumlenkstrukturen mittels eines Lasers erreicht werden. Unterschiedliche optische Effekte können aber auch durch das Anordnen der Lichtumlenkstrukturen auf unterschiedlichen Höhen innerhalb des Lichtleiters, durch unterschiedliche Neigungen der Lichtumlenkstrukturen relativ zur Lichtauskoppelfläche des Lichtleiters oder durch regelmässige und/oder unregelmässige Abstände zwischen den Lichtumlenkstrukturen erreicht werden.

Der erfindungsgemässe Lichtleiter kann zur Herstellung eines beliebigen Bauteils verwendet werden, welches zusätzlich zum Lichtleiter weitere Elemente aufweisen kann. So kann ein Bauteil zusätzlich zum Lichtleiter zum Beispiel eine Deckschicht aufweisen. Die Deckschicht kann am Lichtleiter angespritzt sein oder beispielsweise als transparente Folie ausgebildet sein, wobei die Deckschicht als Schutz des Lichtleiters gegen äussere Einflüsse dienen kann. Die Deckschicht kann insbesondere koloriert sein, um eine farbige Ausleuchtung zu bewirken. Alternativ oder zusätzlich kann eine Beschichtung am Lichtleiter angebracht sein, um die entsprechenden oder andere Effekte zu erzielen. Das Anbringen einer Beschichtung ist möglich, da die Lichtumlenkstrukturen im Inneren des Lichtleiters angeordnet sind und somit durch das Beschichten nicht beschädigt werden. Auch die Herstellung eines Bauteils mit einem derartigen Lichtleiter im Zweikomponentenspritzguss ist möglich, da die Lichtumlenkstrukturen aufgrund ihrer Anordnung im Inneren des Lichtleiters beim Spritzvorgang nicht beschädigt werden. Das Bauteil kann zusätzlich zum Lichtleiter auch eine mit Durchbrüchen versehene Dekorplatte aufweisen, welche den Lichtleiter abdeckt und aufgrund der Anordnung und Form der Durchbrüche zum Beispiel die Anzeige von Buchstaben, Nummern oder Symbolen bewirken kann. Die Dekorplatte kann insbesondere aus Metall hergestellt sein.

Gemäss einer Weiterbildung der Erfindung ist der erfindungsgemässe Lichtleiter für den Automobilbau vorgesehen. Er kann zur Herstellung eines hinterleuchtbaren Dekorelements, einer Zierleiste und insbesondere zur Herstellung einer Einstiegsleiste verwendet werden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Seitenansicht sowie mehrere Querschnittansichten einer schematisch dargestellten Lichtumlenkstruktur mit einteiligem Grundkörper eines erfindungsgemässen Lichtleiters;
- Fig. 2: eine perspektivische Ansicht von schräg oben der Lichtumlenkstruktur der Fig. 1;
- Fig. 3: eine perspektivische Ansicht von schräg oben von drei schematisch dargestellten Lichtumlenkstrukturen eines erfindungsgemässen Lichtleiters;
- Fig. 4: eine perspektivische Ansicht eines schematisch dargestellten Bauteils mit einem erfindungsgemässen Lichtleiter sowie mit einem Laser zur Herstellung von Lichtumlenkstrukturen im Lichtleiter und mit einer LED-Lichtquelle zum Einkoppeln von Licht in den Lichtleiter;
- Fig. 5: eine mikroskopische Schnittansicht eines realen, erfindungsgemässen Lichtleiters, auf der Höhe der Verdickungen der Lichtumlenkstrukturen;
- Fig. 6: eine mikroskopische Schnittansicht in einer senkrecht zur Schnittansicht der Fig. 5 stehenden Ebene durch den Lichtleiter der Fig. 5, durch die Grundkörper von mehreren Lichtumlenkstrukturen; sowie
- Fig. 7: eine Seitenansicht einer schematisch dargestellten Lichtumlenkstruktur mit zweiteiligem Grundkörper eines erfindungsgemässen Lichtleiters.

### BESCHREIBUNG BEVORZUGTER AUSFÜHRUNGSFORMEN

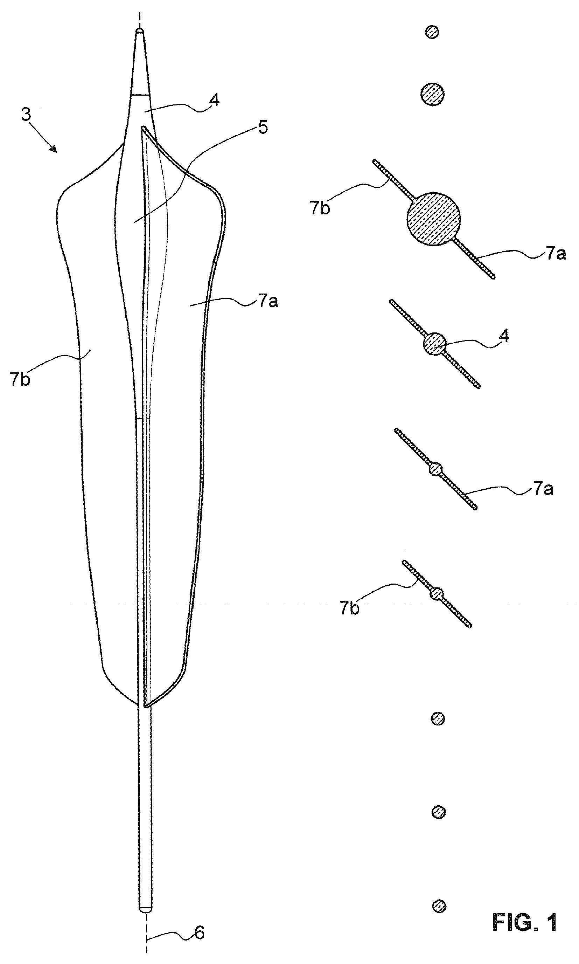

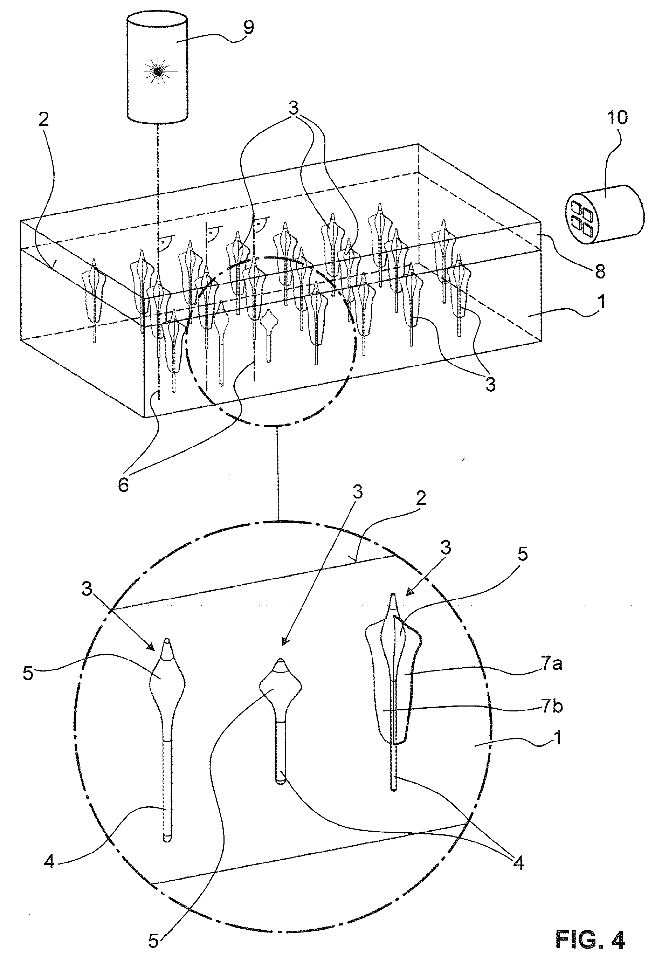

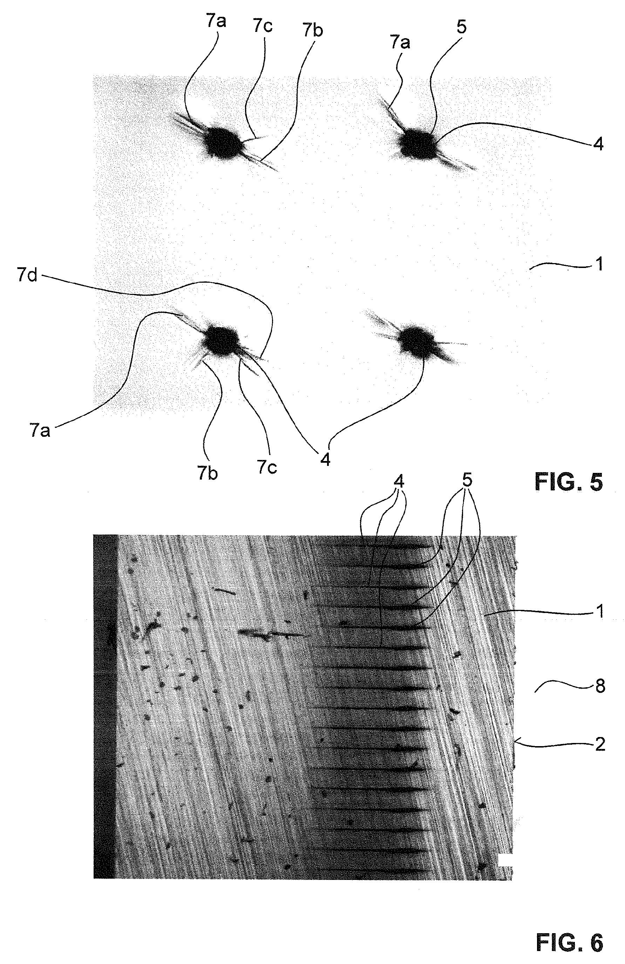

In den Figuren 1 bis 3 sind Lichtumlenkstrukturen 3 eines erfindungsgemässen Lichtleiters gezeigt. Die Figur 4 zeigt ein Bauteil mit einem erfindungsgemässen Lichtleiter 1. Sowohl bei den Figuren 1 bis 3 als auch bei der Figur 4 handelt es sich jeweils um schematische Abbildungen. In den Figuren 5 und 6 sind mikroskopisch erstellte Schnittansichten eines realen, erfindungsgemässen Lichtleiters 1 gezeigt, wobei jeweils eine Vielzahl von Lichtumlenkstrukturen 3 erkennbar sind.

In den Figuren sind jeweils Elemente, welche die gleiche oder eine ähnliche Funktion und Wirkung haben, mit denselben Bezugszeichen versehen.

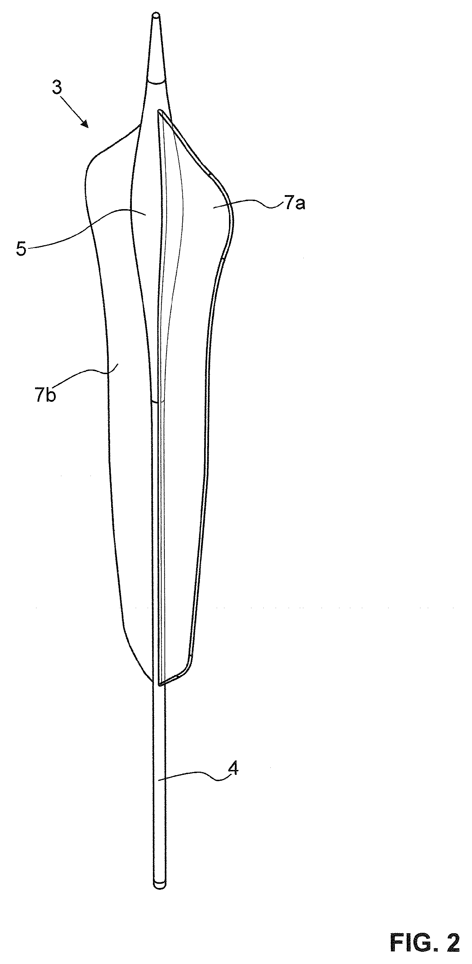

In den Figuren 1 und 2 ist eine einzelne Lichtumlenkstruktur 3 gezeigt. Auf der linken Seite der Figur 1 ist eine Seitenansicht der Lichtumlenkstruktur 3 dargestellt, und auf der rechten Seite sind auf den jeweils entsprechenden Höhen Querschnittsansichten in senkrecht dazu stehenden Ebenen gezeigt. Die dreidimensionale Form der Lichtumlenkstruktur 3 ist insbesondere in der Figur 1 somit gut erkennbar.

Die Lichtumlenkstruktur 3 weist einen stabförmigen, langgestreckten und einteiligen Grundkörper 4 auf, welcher im Wesentlichen rotationssymmetrisch ausgebildet ist und dadurch eine Längsachse 6 des Grundkörpers 4 und der Lichtumlenkstruktur 3 definiert, die mit der Symmetrieachse des Grundkörpers 4 übereinstimmt.

Der Grundkörper 4 weist ausser im Bereich einer Verdickung 5 entlang seiner gesamten Längserstreckung eine im Wesentlichen konstante Dicke auf. Die Verdickung 5 ist bei 15 - 35 % der gesamten Längserstreckung des Grundkörpers 4 angeordnet.

Am Grundkörper 4 sind auf diametral gegenüberliegenden Seiten zwei Fahnen 7a und 7b angebracht. Die beiden Fahnen 7a und 7b erstrecken sich jeweils in radialer Richtung vom Grundkörper 4 gleich weit nach aussen hin. Jede der Fahnen 7a und 7b hat eine flache, im Wesentlichen viereckige Form und ist dementsprechend von vier Aussenseiten begrenzt, von denen eine entlang ihrer gesamten Länge mit dem Grundkörper 4 verbunden ist. Die an diese mit dem Grundkörper 4 angrenzenden oberen und unteren Seiten erstrecken sich jeweils senkrecht zur Längsachse 6 des Grundkörpers 4 nach aussen und leicht schräg zueinander hin.

Die grösste Breite weisen die Fahnen 7a, 7b jeweils in ihrem oberen Bereich auf, welcher ungefähr auf der Höhe der Verdickung 5 angeordnet ist. Nach unten hin, das heisst in Richtung von der Verdickung 5 weg, nimmt die Breite der Fahnen 7a, 7b jeweils etwas ab.

Die Dicke der Fahnen 7a, 7b, welche sich jeweils als Ganzes entlang einer ebenen Fläche erstrecken, ist um ein Vielfaches kleiner als die Seitenlängen der Fahnen 7a, 7b. Die Fahnen 7a, 7b weisen jeweils eine insgesamt im Wesentlichen konstante Dicke auf.

Entlang der Längsachse 6 sind die beiden Fahnen 7a und 7b auf derselben Höhe angeordnet und erstrecken sich mit ihren mit dem Grundkörper 4 verbundenen Seiten über 1/3 bis 2/3 der gesamten Längserstreckung des Grundkörpers 4

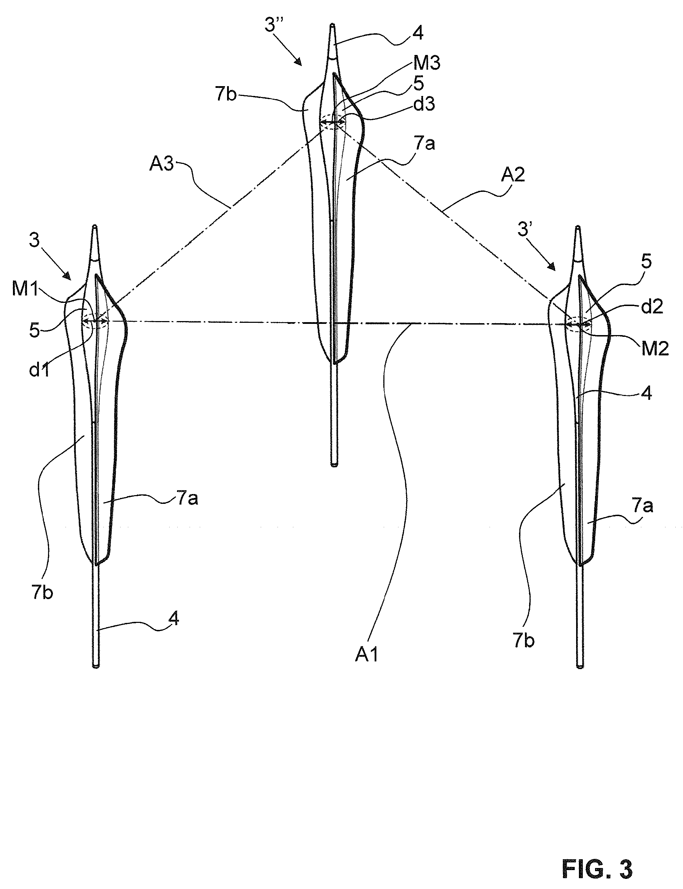

In der Figur 3 sind zur Erläuterung einer bevorzugten geometrischen Anordnung drei Lichtumlenkstrukturen 3, 3', 3", welche im vorliegenden Falle alle einteilig ausgebildet sind, dargestellt, welche in einem erfindungsgemässen Lichtleiter vorgesehen sind. Die drei Lichtumlenkstrukturen 3, 3', 3" erstrecken sich mit ihren Längsachsen 6 parallel zueinander und sind auf derselben Höhe im Lichtleiter angeordnet.

Im Bereich der Verdickung 5 weisen die Lichtumlenkstrukturen 3, 3', 3" jeweils einen maximalen Durchmesser d bzw. die jeweiligen maximalen Durchmesser d1, d2, d3 auf, der bevorzugt höchstens 30 µm beträgt. Gemessen wird der maximale Durchmesser d jeweils senkrecht zur Längsachse 6. In den Bereichen ausserhalb der Verdickung 5 ist der Durchmesser des Grundkörpers 4 halb so gross oder noch kleiner.

Durch die Lage des maximalen Durchmessers d entlang der Längserstreckung des Grundkörpers 4 ist jeweils ein Mittelpunkt M1, M2 bzw. M3 der Verdickung 5 definiert. In einer senkrecht zur Längsachse 6 stehenden Querschnittansicht auf der Höhe des Mittelpunkts M1, M2 bzw. M3 bildet die Verdickung 5 jeweils eine kreisförmige Fläche, welche in der Figur 3 jeweils durch eine gestrichelte Linie angedeutet ist.

Es hat sich gezeigt, dass die Lichtumlenkstrukturen 3, 3', 3" dann im unbeleuchteten Zustand des Lichtleiters für einen Betrachter kaum sichtbar sind, wenn:
- die Abstände A1, A2 und A3 zwischen den jeweiligen Mittelpunkten M1, M2 und M3 der Lichtumlenkstrukturen 3, 3', 3" 50 µm oder mehr betragen (d.h. A1 ≥ 50 µm, A2 ≥ 50 µm und A3 ≥ 50 µm), und
- die Durchmesser d1, d2, d3 höchstens 30 µm betragen (d.h. d1 ≤ 30 µm, d2 ≤ 30 µm, d3 ≤ 30 µm).

Bevorzugt erfüllen die Abstände A1, A2, A3 noch folgendes 1. Kriterium:
Die Abstände A1, A2 und A3 sind jeweils grösser als dreimal der Durchmesser wenigstens eines Durchmessers der Durchmesser d1, d2, d3.

Bevorzugt erfüllen die Abstände A1, A2, A3 zusätzlich oder alternativ zum 1. Kriterium noch folgendes 2. Kriterium:
Der Mittelpunkt einer jeweiligen Lichtumlenkstruktur 3, 3' oder 3" (z.B. M1) zum Mittelpunkt sämtlicher weiteren Lichtumlenkstrukturen des Lichtleiters (M2, M3) weist einen Abstand A (M1 zu M2: Abstand A1/M1 zu M3: Abstand A3) auf, wobei der Abstand A (A1, A3) grösser als der Durchmesser d der jeweiligen Lichtumlenkstruktur 3, 3' oder 3" (Durchmesser d1) geteilt durch den Wert 0.33 ist.
Mit anderen Worten formuliert, werden im Falle von drei Lichtumlenkstrukturen bzw. im Falle der drei Lichtumlenkstrukturen 3, 3', 3" die Abstände A bzw. die Abstände A1, A2, A3 gemäss dem 2. Kriterium wie folgt berechnet:
- Die Lichtumlenkstruktur 3 wird als die oben genannte jeweilige Lichtumlenkstruktur betrachtet und somit sind die Lichtumlenkstrukturen 3', 3" die oben genannten weiteren Lichtumlenkstrukturen. Die Abstände A1 und A3 betragen somit jeweils mindestens den Durchmesser d1 der Lichtumlenkstruktur 3 geteilt durch 0.33.
- Die Lichtumlenkstruktur 3' wird als die oben genannte jeweilige Lichtumlenkstruktur betrachtet und somit sind die Lichtumlenkstrukturen 3, 3" die oben genannten weiteren Lichtumlenkstrukturen. Die Abstände A1, A2 betragen somit jeweils mindestens den Durchmesser d2 der Lichtumlenkstruktur 3' geteilt durch 0.33
- Die Lichtumlenkstruktur 3" wird als die oben genannte jeweilige Lichtumlenkstruktur betrachtet und somit sind die Lichtumlenkstrukturen 3, 3' die oben genannten weiteren Lichtumlenkstrukturen. Die Abstände A2, A3 betragen somit jeweils mindestens den Durchmesser d3 der Lichtumlenkstruktur 3" geteilt durch 0.33.

Wenn die maximalen Durchmesser der verschiedenen Lichtumlenkstrukturen 3, 3' und 3" jeweils ungefähr gleich gross sind, d.h. d1=d2=d3=d müssen die Abstände A1, A2 und A3 gemäss dem 2. Kriterium jeweils grösser als dreimal den Durchmesser d sein (d.h. A1 ≥ 3d, A2 ≥ 3d und A3 ≥ 3d).

Die obenstehenden Angaben gelten sinngemäss für Lichtleiter mit wesentlich mehr als drei Lichtumlenkstrukturen 3 und insbesondere für Lichtleiter, bei denen die einzelnen Lichtumlenkstrukturen 3 jeweils gleich oder ähnlich ausgestaltet und dimensioniert sind.

Die Figur 4 zeigt oben ein Bauteil mit einem Lichtleiter 1 sowie einer Deckschicht 8, welche an einer Lichtauskoppelfläche 2 des Lichtleiters 1 angebracht ist und diese vollständig überdeckt. Die Deckschicht 8 kann an den Lichtleiter 1 angespritzt sein und aus einem anderen Material als der Lichtleiter 1 hergestellt sein. Das Bauteil kann somit insbesondere im Zweikomponentenspritzguss hergestellt sein, wobei das Material des Lichtleiters 1 die erste und dasjenige der Deckschicht 8 die zweite Komponente bildet. Bei der Deckschicht 8 kann es sich aber zum Beispiel auch um eine Folie oder eine Beschichtung handeln. Die Deckschicht 8 kann einen Schutz des Lichtleiters 1 vor externen Einflüssen bilden. Die Deckschicht 8 kann aber auch eine Kolorierung aufweisen, um die Abstrahlung von farbigem Licht zu ermöglichen. Des Weiteren ist möglich, dass die Deckschicht 8 die Funktion eines Diffusors hat, um eine diffuse Lichtabstrahlung zu bewirken und/oder die Sichtbarkeit der Lichtumlenkstrukturen 3 zu verringern. Vorzugsweise ist die Deckschicht 8 transparent ausgebildet.

Zur Herstellung der Vielzahl von in regelmässigen Abständen und parallel zueinander im Lichtleiter 1 angeordneten Lichtumlenkstrukturen 3, welche im vorliegenden Fall alle einteilig ausgebildet sind, wird ein Laser 9 verwendet. Dabei wird vom Laser 9 Laserlicht ausgestrahlt, um Energie in das Innere des Lichtleiters 1 einzutragen und dadurch an den gewünschten Stellen die Ausbildung der Lichtumlenkstrukturen 3 zu bewirken. Durch den Energieeintrag wird das Lichtleitermaterial lokal aufgeschmolzen und danach wieder abgekühlt. Die Herstellung der Lichtumlenkstrukturen 3 kann vor dem Anbringen der Deckschicht 8 am Lichtleiter 1 erfolgen oder das Laserlicht kann, wie in der Figur 4 gezeigt, durch die Deckschicht 8 hindurch in den Lichtleiter 1 eingestrahlt werden. Vorzugsweise wird das Laserlicht derart entsprechend der Figur 4 in den Lichtleiter 1 eingestrahlt, dass der Laserstrahl senkrecht zur Lichtauskoppelfläche 2 in den Lichtleiter 1 eindringt.

Zur Ausleuchtung bei einer bestimmungsgemässen Verwendung des Lichtleiters 1 wird das Licht von einer oder mehreren Lichtquellen 10 bevorzugt seitlich in den Lichtleiter 1 eingestrahlt, das heisst derart, dass es aus einer ungefähr senkrecht zu den Längsachsen 6 stehenden Richtung auf die Lichtumlenkstrukturen 3 trifft. Alternativ oder zusätzlich kann eine oder mehrere Lichtquellen auch im Lichtleiter 1 eingebettet sein. Bei der oder den Lichtquellen 10 kann es sich insbesondere um LED-Lichtquellen handeln.

Um eine gleichmässige Ausleuchtung der Lichtauskoppelfläche 2 zu erreichen, sind die Lichtumlenkstrukturen 3 bevorzugt jeweils gleich ausgebildet und bevorzugt in regelmässigen Abständen zueinander angeordnet.

Um eine ungleichmässige Ausleuchtung der Lichtauskoppelfläche 2 mit einer variierenden Helligkeitsverteilung zu erreichen, können die Lichtumlenkstrukturen in entsprechend unregelmässigen Abständen zueinander im Lichtleiter 1 angeordnet sein. Sie können aber auch in regelmässigen Abständen, das heisst in einem regelmässigen Raster angeordnet sein und dafür geometrisch unterschiedlich ausgestaltet und/oder dimensioniert sein, um die gewünschte variierende Helligkeitsverteilung zu erreichen. Drei unterschiedlich ausgestaltete und dimensionierte Lichtumlenkstrukturen 3, welche im vorliegenden Fall alle einteilig ausgebildet sind, sind beispielhaft in der Detailansicht der Figur 4 unten dargestellt. So können die Lichtumlenkstrukturen 3 zum Beispiel unterschiedliche Längen und Dicken ihrer Verdickungen 5 aufweisen, was durch unterschiedliche Energieeinträge mittels des Lasers 9 einfach erreicht werden kann. Die Lichtumlenkstrukturen 3 können auch derart hergestellt werden, dass sie unterschiedlich viele Fahnen 7a, 7b aufweisen. Die Lichtumlenkstrukturen 3 können auch auf unterschiedlichen Höhen und/oder in unterschiedlichen Ausrichtungen im Lichtleiter 1 angeordnet sein.

Die Figuren 5 und 6 zeigen mikroskopische Aufnahmen eines real hergestellten, erfindungsgemässen Lichtleiters. Für die Herstellung der Lichtumlenkstrukturen 3, welche im vorliegenden Fall alle einteilig ausgebildet sind, wurde ein grüner Laser der Herstellerfirma Coherent GmbH, 64807 Dieburg, Deutschland, verwendet. Es handelte sich dabei um das Modell Hyperrapid 25, welches eine maximale Ausgangsleistung von 25 W (Watt) aufweist. Die Pulsdauer der Laserpulse betrug 10 ps (Pikosekunden) und die Wellenlänge 532 nm. Dabei wurde mittels einer 100 mm Optik fokussiert, was einem Spotdurchmesser von ca. 10 µm entspricht. Der grüne Laser wurde mit einer Leistung von ca. 5W (Watt) betrieben.

Wie aus den Figuren 5 und 6 ersichtlich ist, konnte auf diese Weise eine Vielzahl von Lichtumlenkstrukturen 3 erzeugt werden. Die in den Figuren 5 und 6 gezeigten Lichtumlenkstrukturen 3 weisen jeweils eine ähnliche Ausgestaltung wie diejenigen der Figuren 1 bis 4 auf. Im Unterschied zu den Lichtumlenkstrukturen 3 der Figuren 1 bis 4 weisen die real erzeugten Lichtumlenkstrukturen 3 der Figuren 5 und 6 jeweils mehr als zwei Fahnen auf. Es sind bei allen Lichtumlenkstrukturen 3 zumindest drei Fahnen 7a, 7b und 7c sowie allenfalls weitere Fahnen erkennbar. Zumindest zwei der drei Fahnen 7a, 7b und 7c sind auf einander im Wesentlichen diametral gegenüberliegenden Seiten des Grundkörpers 4 angeordnet und bewirken dadurch eine besonders grosse für die Lichtumlenkung massgebende Oberfläche.

In der Figur 5 sind jeweils die Verdickungen 5 der Grundkörper 4 der Lichtumlenkstrukturen 3 sichtbar. Es ist sind insbesondere die senkrecht zu den Längsachsen 6 stehenden Querschnittsflächen der Verdickungen 5 sichtbar. Dabei ist gut zu erkennen, dass diese Querschnittsflächen jeweils kreisförmig ausgebildet sind, das heisst von einer äusseren Begrenzungslinie umrandet sind, welche zumindest annähernd einen Kreis bildet.

Bei den Versuchen hat sich gezeigt, dass die Gesamtlänge der Lichtumlenkstrukturen 3 von der Laserenergie abhängt. Dasselbe gilt für den maximalen Radius d/2 der Verdickung 5. Die Lage der Verdickung 5 in Längsrichtung des Grundkörpers 4 ist jedoch weitgehend unabhängig von der Laserenergie bei 15 - 35 % der Gesamtlänge des Grundkörpers 4.

Beim Material des in den Figuren 5 und 6 gezeigten Lichtleiters 1 handelt es sich um Polymethylmethacrylat (PMMA), insbesondere um Plexiglas^{®} 8N der Firma Evonik Industries AG (Kirschenallee, 64293 Darmstadt).

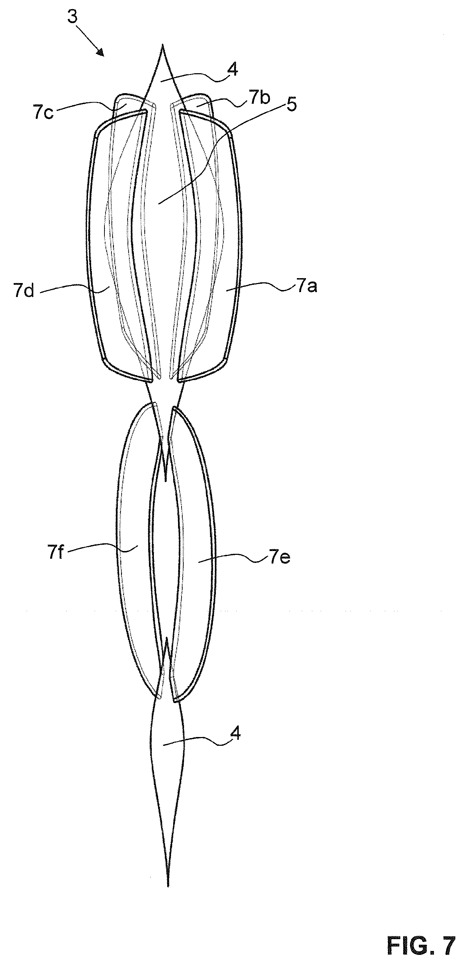

Die Figur 7 zeigt eine weitere mögliche Ausführungsform einer Lichtumlenkstruktur 3 eines erfindungsgemässen Lichtleiters 1. Der Lichtleiter 1 kann Lichtumlenkstrukturen entsprechend der in der Figur 1 gezeigten oder entsprechend der in der Figur 7 gezeigten Ausführungsform aufweisen. Er kann aber selbstverständlich auch verschiedene Lichtumlenkstrukturen 3, d.h. von beiden Ausführungsformen, aufweisen.

Die in der Figur 7 gezeigte Lichtumlenkstruktur 3 hat im Gegensatz zu derjenigen der Figur 1 einen zweiteiligen Grundkörper 4 mit zwei beabstandet zueinander angeordneten Teilen, welche via zwei Fahnen e, f miteinander verbunden sind. Die Lichtumlenkstruktur 3 der Figur 7 weist einen oberen Bereich auf, in welchem der erste Teil des Grundkörpers 4 angeordnet ist. An diesem ersten Teil des Grundkörpers 4, welcher eine Verdickung 5 bildet, sind vier Fahnen a, b, c, d angebracht. Die vier Fahnen a, b, c, d erstrecken sich jeweils nur im oberen Bereich der Lichtumlenkstruktur 3. Ein mittlerer Bereich der Lichtumlenkstruktur 3 weist zwei Fahnen e, f, welche an ihren oberen und unteren Enden jeweils miteinander verbunden sind, dazwischen jedoch beabstandet zueinander verlaufen. Da im mittleren Bereich der Lichtumlenkstruktur 3 kein Grundkörperteil vorhanden ist, befindet sich zwischen den beiden Fahnen e und f ein Leerraum. Die Lichtumlenkstruktur weist zudem einen unteren Bereich auf, welcher durch einen zweiten Teil des Grundkörpers 4 ohne daran angebrachte Fahnen gebildet wird. Der erste und der zweite Teil des Grundkörpers 4 sind somit beabstandet zueinander angeordnet.

**BEZUGSZEICHENLISTE**

| | | | |
|---|---|---|---|
| 1 | Lichtleiter | 8 | Deckschicht |
| 2 | Lichtauskoppelfläche | 9 | Laser |
| 3, 3',3" | Lichtumlenkstruktur | 10 | Lichtquelle |
| 4 | Grundkörper | | |
| 5 | Verdickung | d1-d3 | Durchmesser |
| 6 | Längsachse | M1-M3 | Mittelpunkte |
| 7a-7f | Fahnen | A1-A3 | Abstände |

## Patentansprüche

1. Lichtleiter (1) mit einer Vielzahl von Lichtumlenkstrukturen (3), die im Inneren des Lichtleiters (1) angeordnet sind,
**dadurch gekennzeichnet, dass**
die Lichtumlenkstrukturen (3) jeweils einen langgestreckten Grundkörper (4) aufweisen, welcher entlang seiner Längsrichtung um ein Vielfaches grösser dimensioniert ist als in die senkrecht zu dieser Längsrichtung stehenden Richtungen.

2. Lichtleiter (1) nach Anspruch 1, wobei die Lichtumlenkstrukturen (3) durch eine lokale Materialveränderung, insbesondere durch eine Aufschmelzung des Materials, des Lichtleiters (1) hergestellt sind.

3. Lichtleiter (1) nach Anspruch 1 oder 2, wobei die Lichtumlenkstrukturen (3) mittels eines Lasers (9) hergestellt sind.

4. Lichtleiter (1) nach Anspruch 3, wobei die Lichtumlenkstrukturen (3) mit Hilfe von grünem Laserlicht hergestellt sind.

5. Lichtleiter (1) nach einem der vorhergehenden Ansprüche, wobei der Grundkörper (4) der Lichtumlenkstrukturen (3) jeweils im Wesentlichen rotationssymmetrisch ist.

6. Lichtleiter (1) nach einem der vorhergehenden Ansprüche, wobei die Grundkörper (4) entlang ihrer Längsrichtung jeweils eine lokale Verdickung (5) aufweisen.

7. Lichtleiter (1) nach Anspruch 6, wobei die Verdickung (5) in Bezug auf die Längsrichtung des Grundkörpers (4) bei 15 - 35% der gesamten Längserstreckung des Grundkörpers (4) angeordnet ist.

8. Lichtleiter (1) nach einem der vorhergehenden Ansprüche, wobei sich die Grundkörper (4) der Lichtumlenkstrukturen (3) entlang ihrer jeweiligen Längsrichtung parallel zueinander erstrecken.

9. Lichtleiter (1) nach einem der vorhergehenden Ansprüche, wobei die Lichtumlenkstrukturen (3) jeweils zumindest eine, insbesondere mehrere Fahnen (7a-7d) aufweisen, welche am Grundkörper (4) angebracht sind.

10. Lichtleiter (1) nach Anspruch 9, wobei sich die zumindest eine Fahne (7a-7d) über 1/3 bis 2/3 der gesamten Längserstreckung des Grundkörpers (4) erstreckt.

11. Lichtleiter (1) nach Anspruch 9 oder 10, wobei zumindest zwei der Fahnen (7a-7d) auf im Wesentlichen diametral einander gegenüberliegenden Seiten am Grundkörper (4) angebracht sind.

12. Lichtleiter (1) nach einem der Ansprüche 9 bis 11, wobei die zumindest eine Fahne (7a-7d) als Ganzes eine im Wesentlichen ebene Fläche bildet, die sich vom Grundkörper (4) aus in eine radiale Richtung nach aussen hin erstreckt.

13. Lichtleiter (1) nach einem der vorhergehenden Ansprüche, wobei der Lichtleiter (1) eine Lichtauskoppelfläche (2) aufweist, und wobei die Grundkörper (4) der Lichtumlenkstrukturen (3) mit ihren Längsrichtungen jeweils im Wesentlichen senkrecht zu dieser Lichtauskoppelfläche (2) stehen.

14. Lichtleiter (1) nach einem der vorhergehenden Ansprüche, wobei die Grundkörper (4) der Lichtumlenkstrukturen (3) jeweils eine Längserstreckung von mindestens 100 µm, bevorzugt von mindestens 300 µm, aufweisen.

15. Lichtleiter (1) nach einem der vorhergehenden Ansprüche, wobei die Lichtumlenkstrukturen (3) in Abständen zueinander, bevorzugt in regelmässigen Abständen zueinander, im Lichtleiter (1) angeordnet sind, und wobei die Abstände (A1, A2, A3) zwischen den Lichtumlenkstrukturen (3) bevorzugt jeweils mindestens 50 µm betragen, insbesondere 50 - 150 µm.

16. Lichtleiter (1) nach einem der vorhergehenden Ansprüche, wobei die Lichtumlenkstrukturen (3) derart im Lichtleiter (1) angeordnet sind, dass das von den Lichtumlenkstrukturen (3) ausgekoppelte Licht als ein Buchstabe, eine Nummer oder ein Symbol erscheint.

17. Lichtleiter (1) nach einem der vorhergehenden Ansprüche, wobei die verschiedenen Lichtumlenkstrukturen (3) unterschiedliche Geometrien, insbesondere unterschiedliche Längserstreckungen, aufweisen, so dass das via eine Lichtauskoppelfläche (2) des Lichtleiters (1) ausgekoppelte Licht eine Helligkeitsverteilung aufweist, welche über die Lichtauskoppelfläche (2) variiert.

18. Lichtleiter (1) nach einem der vorhergehenden Ansprüche, wobei der Lichtleiter (1) für den Automobilbau und insbesondere zum Herstellen einer Einstiegsleiste vorgesehen ist.

19. Verfahren zur Herstellung eines Lichtleiters (1) nach einem der vorhergehenden Ansprüche, wobei ein Lichtleiter (1) mit einem Laser (9) bestrahlt wird, um im Inneren des Lichtleiters (1) eine Vielzahl von Lichtumlenkstrukturen (3) mit jeweils einem langgestreckten Grundkörper (4) auszubilden.
